# EUROPEAN PATENT SPECIFICATION

(11) **EP 2 379 462 B1**
(45) Date of publication and mention of the grant of the patent: **11.11.2020**
(21) Application number: 09796559.4
(22) Date of filing: 21.12.2009
(51) Int. Cl.: C03C 3/087, C03C 3/091, C03C 3/085, C03C 13/00, C03B 5/235, C03B 5/43, C03B 7/06, F23C 5/08

(54) **METHOD OF MANUFACTURING HIGH STRENGTH GLASS FIBERS IN A DIRECT MELT OPERATION AND PRODUCTS FORMED THERE FROM**
VERFAHREN ZUR HERSTELLUNG VON HOCHFESTEN GLASFASERN IN EINEM DIREKTSCHMELZARBEITSGANG UND DARAUS GEBILDETE PRODUKTE
PROCÉDÉ DE FABRICATION DE FIBRES DE VERRE DE HAUTE RÉSISTANCE PAR FUSION DIRECTE, ET PRODUITS FORMÉS AVEC CES FIBRES

(30) Priority: 22.12.2008 US 341985; 13.03.2009 US 403955
(43) Date of publication of application: 26.10.2011
(73) Proprietor: OCV Intellectual Capital, LLC, Toledo, OH 43659 (US)
(72) Inventor: MCGINNIS, Peter Bernard, Gahanna, Ohio 43230 (US); HOFMANN, Douglas, Hebron, Ohio 43025 (US); BAKER, David, Newark, Ohio 43055 (US); WINGERT, John, Granville, Ohio 43023 (US); BEMIS, Byron, Newark, Ohio 43055 (US)
(74) Representative: Cabinet Beau de Loménie
(86) International application number: PCT/US2009/068965
(87) International publication number: WO 2010/075267

(56) References cited:
- WO-A1-99/31021
- WO-A1-2010/075262
- WO-A2-2007/055968
- GB-A- 1 147 718
- JP-A- 2002 154 843
- JP-A- 2003 321 247
- US-A- 5 851 932
- US-A1- 2003 188 554
- US-A1- 2007 105 701

## Description

### TECHNICAL FIELD AND INDUSTRIAL APPLICABILITY OF THE INVENTION

The present invention is generally directed to a method of manufacturing continuous glass fibers for use in high-strength applications and products made there from, such as ballistic armor, pressure vessels, structural aerospace materials, structural marine materials, and structural materials for wind energy such as windmill masts and blades.

### BACKGROUND OF THE INVENTION

Fiberglass reinforced composite materials have been available for use in marine and aerospace materials for some time. Other fiber materials such as carbon and aramid fibers are available for use, although at substantially higher cost. The articles of the present invention may use any known manufacturing method, including compression molding, laminating, spray up, hand laying, prefabricated lay-up (prepreg), compression molding, vacuum bag molding, pressure bag molding, press molding, transfer molding, vacuum assisted resin transfer molding, pultrusion molding, filament winding, casting, autoclave molding, centrifugal casting resin transfer and continuous casting. The properties of the composite are controlled by the fibers and the resin, and synergy between the two, that produces material properties unavailable from the individual materials.

A number of resins are useful in the manufacture of composite articles including polyester resin, vinylester resin and epoxy resin. Polyester resin is suitable for a number of situations. Vinylester resin has lower viscosity precure and more flexible postcure than polyester resin and is typically more resistant to degradation. Epoxy resin is typically transparent when cured. Epoxy resin is a polyether resin formed by the polymerization bisphenol A, bisphenol F, bisphenol C, and compounds of similar structure with epichlorohydrin resulting in the formation of the reactive oxirane linkage. Epoxy resins may react with a variety of curing agents, including amines, anhydrides, mercaptans, polyesters to form an infusable solid. The reaction is a condensation reaction typically does not create by-products. Cured epoxy resins have high strength, and low shrinkage during curing. They are used as coatings, adhesives, castings, composites, or foam. Epoxy resins are also desirable for use in high strength applications as a structural matrix material or as a structural glue. Phenolics are thermosetting resins formed by the condensation of phenol, or of a phenol derivative, with an aldehyde, typically a formaldehyde. Phenolics are used chiefly in the manufacture of paints and plastics. Other specific high strength modulus resins include bismaleimide, poly- amide, vinyl ester phenolic, ethylene-acrylate or methacrylate copolymers, high strength medium modulus thermoplastics such as an ionomer (i.e. crosslinked ethylene-methyl acrylate or methyl methacrylate copolymer), polycarbonate, polyurethane, nylon, aramid, modified epoxies.

The most common high strength glass composition for making continuous glass fiber strands is "S-Glass." S-Glass is a family of glasses composed primarily of the oxides of magnesium, aluminum, and silicon with a chemical composition that produces glass fibers having a higher mechanical strength than E-Glass fibers. A commonly used member of the S-Glass family is known as S2-Glass. S2-Glass includes approximately 65 weight % SiO₂, 25 weight % Al₂O₃, and 10 weight % MgO. S-glass has a composition that was originally designed to be used in high-strength applications such as ballistic armor.

R-Glass is a family of glasses that are composed primarily of the oxides of silicon, aluminum, magnesium, and calcium with a chemical composition that produces glass fibers with a higher mechanical strength than E-Glass fibers. R-Glass has a composition that contains approximately 58 - 60 weight % SiO₂, 23.5 - 25.5 weight % Al₂O₃, 14 - 17 weight % CaO plus MgO, 0 % B₂O₃, 0 % F₂ and less than 2 weight % miscellaneous components. R-Glass contains more alumina and silica than E-Glass and requires higher melting and processing temperatures during fiber forming. Typically, the melting and processing temperatures for R-Glass are at least 160° C higher than those for E-Glass. This increase in processing temperature typically requires the use of a high-cost platinum-lined melter. In addition, the close proximity of the liquidus temperature to the forming temperature in R-Glass requires that the glass be fiberized at a higher temperature than E-Glass.

Other known high-strength glass compositions can be found in U.S. patent application Ser. No. 11/267,739 entitled "Composition for High Performance Glass, High Performance Glass Fibers and Articles Therefrom", published as U.S. Patent Application Pub. No. 2008/0009403.

Both R-Glass and S-Glass are produced by melting the constituents of the compositions in a platinum-lined melting container. The costs of forming R-Glass and S-Glass fibers are dramatically higher than E-Glass fibers due to the cost of producing the fibers in such melters. Thus, there is a need in the art for methods of forming glass compositions useful in the formation of high performance glass fibers from a direct-melt process in a furnace substantially free of platinum or other noble metal materials and products formed there from.

GB-A-1 147 718 discloses a glass fiber comprised of from 54 to 72 weight percent silica, from 11 to 32 weight percent aluminium oxide, from 7.4 to 22.8 weight percent magnesium oxide, and arsenic oxide, in an amount equal to at least 0.1 percent by weight based on the total fibre and optionally other compatible constituents.

### SUMMARY OF THE INVENTION

The present invention includes a process for producing glass fibers from a raw glass batch with a glass melter substantially free of platinum or other noble metal materials. The process includes charging a raw glass batch to a melting zone of a glass melter, heating the raw glass batch to a forming temperature in excess of the liquidus temperature of a resulting glass to form a fiberizable molten glass, and fiberizing the molten glass. The present invention also includes products made from such fibers.

In one embodiment the invention comprises a method of forming high strength glass fibers in a continuous system having a furnace, a forehearth, and a bushing. The method includes providing a glass melting furnace for receiving glass batch and discharging molten glass, and lining at least a portion of the furnace with a material substantially free of noble metal materials to form a furnace glass contact surface. Glass batch is supplied to the furnace, the glass batch consisting of 64 to 70 weight percent SiO₂, 17 to 22 weight percent Al₂O₃, 9 to 12 weight percent MgO, 1.75 to 3.0 weight percent R₂O, where R₂O equals the sum of Li₂O, Na₂O and K₂O, and trace impurities present in the raw materials providing the SiO₂, Al₂O₃, MgO and R₂O components, each impurity being present in an amount of 0.05 weight percent or less.. The glass batch is melted in the furnace by providing heat from a furnace heat source, such as oxy-fuel burners, forming a pool of molten glass in contact with the furnace glass contact surface. A forehearth is provided for transporting molten glass from the furnace to the bushing, and at least a portion of the forehearth is lined with a material substantially free of noble metal materials to form a forehearth glass contact surface. The molten glass is transported in the forehearth while heat is provided from a forehearth heat source and flows through the forehearth along a substantially horizontal flow path formed by the forehearth glass contact surface. The molten glass is discharged from the forehearth into the bushing at a temperature of about 2400 °F (1316 °C) to about 2900 °F (1593 °C) and a predetermined viscosity (e.g. about 1000 poise), and is formed into continuous fibers.

The invention includes a method of manufacturing a glass composition for the formation of continuous glass fibers and products made there from that are suitable for use in high-strength applications. Compositions useful in the present invention may be inexpensively formed into glass fibers using low-cost, direct melting in a furnace substantially free of platinum or other noble metal materials, including alloys thereof.

One composition useful in the present invention includes 64-75 weight % SiO₂, 16-26 weight % Al₂O₃, 8-12 weight % MgO and 0 to 3.0 weight % R₂O where R₂O is the sum of Li₂O, Na₂O and K₂O.

In one embodiment, the glass composition is composed of 64-70 weight % SiO₂, 17-22 weight % Al₂O₃, 9-12 weight % MgO and 1.75-3.0 weight % R₂O where R₂O is the sum of Li₂O, Na₂O and K₂O. In another embodiment, a glass composition useful in the present invention is composed of 64-70 weight % SiO₂, 17-22 weight % Al₂O₃, 9-12 weight % MgO and 1.75-3.0 weight % Li₂O.

In some exemplary embodiments, the desired properties of glass produced by the above-mentioned batch include a fiberizing temperature of less than 2650 ° F (1454 °C) and a liquidus temperature that is preferably below the fiberizing temperature by at least 80° F (44 °C), more preferably by at least about 120° F (67 °C), and most preferably by at least about 150° F (83 °C).

The present invention also provides a structural part having improved structural properties with decreased costs and improved manufacturability. The direct melt formation of the continuous glass fibers uses low-cost melting in a glass melter substantially free of platinum or other noble metal materials. The relatively low fiberizing temperature of the glass fibers used in the high-strength applications of the present invention allows improved fiber processing at decreased cost. The articles of the present invention are typically formed by compression molding, laminating, spray up, hand laying, prefabricated lay-up (prepreg), compression molding, vacuum bag molding, pressure bag molding, press molding, transfer molding, vacuum assisted resin transfer molding, pultrusion molding, filament winding, casting, autoclave molding, centrifugal casting resin transfer or continuous casting.

The fibers produced and used in the present invention are substantially less expensive to make and also have good strength and density properties. The density of the fibers used in the present invention range between 2.434 - 2.520 g/cc, and more preferably 2.434 - 2.486 g/cc and have a measured modulus greater than 87.57 GPa (12.7 MPsi) and a measured pristine fiber strength greater than 4689 MPa (680 KPsi).

### BRIEF DESCRIPTION OF THE DRAWINGS

FIG. 1 is a cross-sectional longitudinal view of a glass melting furnace useful with the method of the present invention;
FIG. 2 is a cross-sectional plan view of the glass melting furnace of FIG. 1 taken along line 2--2;
FIG. 3 is a cross-sectional view of the glass melting furnace of FIG. 1 taken along line 3--3 illustrating two burners adjacent the upstream end wall of the furnace;
FIG. 4 is an alternate cross-sectional plan view of the glass melting furnace of FIG. 1 taken along line 3--3 illustrating one burner adjacent the upstream end wall of the furnace; and
FIG. 5 is a side view, partially in cross section, of a bushing assembly/support structure arrangement for producing continuous glass filaments useful in the method of the present invention.
FIG. 6 is a top plan view in cross-section of an exemplary forehearth useful in the method of the present invention for transporting molten glass from the glass melting furnace to the bushing assembly/support.
FIG. 7 is a side elevation view in cross-section of another exemplary forehearth useful in the method of the present invention.

### DETAILED DESCRIPTION AND PREFERRED EMBODIMENTS OF THE INVENTION

The present invention will now be described with occasional reference to the specific embodiments of the invention. This invention may, however, be embodied in different forms and should not be construed as limited to the embodiments set forth herein. Rather, these embodiments are provided so that this disclosure will be thorough and complete, and will fully convey the scope of the invention to those skilled in the art.

Unless otherwise defined, all technical and scientific terms used herein have the same meaning as commonly understood by one of ordinary skill in the art to which this invention belongs. The terminology used in the description of the invention herein is for describing particular embodiments only and is not intended to be limiting of the invention. As used in the description of the invention and the appended claims, the singular forms "a," "an," and "the" are intended to include the plural forms as well, unless the context clearly indicates otherwise.

Unless otherwise indicated, all numbers expressing quantities of ingredients, properties such as molecular weight, reaction conditions, and so forth as used in the specification and claims are to be understood as being modified in all instances by the term "about." Accordingly, unless otherwise indicated, the numerical properties set forth in the specification and claims are approximations that may vary depending on the desired properties sought to be obtained in embodiments of the present invention. Notwithstanding that the numerical ranges and parameters setting forth the broad scope of the invention are approximations, the numerical values set forth in the specific examples are reported as precisely as possible. Any numerical values, however, inherently contain certain errors necessarily resulting from error found in their respective measurements.

Fiberizing properties of the glass composition used to form the glass fibers of the present invention include the fiberizing temperature, the liquidus, and delta-T. Unless otherwise defined herein, the fiberizing temperature is defined as the temperature that corresponds to a viscosity of 1000 poise (log 3 temperature). One skilled in the art will recognize that other fiberizing temperatures may be defined, e.g. a fiberizing temperature may be defined as the temperature that corresponds to a viscosity of 316 poise (log 2.5 temperature).

As discussed in more detail below, in certain embodiments a lowered fiberizing temperature reduces the production cost of the fibers, allows for a longer bushing life, increases throughput, permits the glass to be melted in a melter substantially free of platinum or other noble metal materials, and reduces energy usage. For example, at a lower fiberizing temperature, a bushing operates at a cooler temperature and does not "sag" as quickly. Sag is a phenomenon that occurs in bushings that are held at an elevated temperature for extended periods of time. By lowering the fiberizing temperature, the sag rate of the bushing may be reduced and the bushing life can be increased. In addition, a lower fiberizing temperature allows for a higher throughput since more glass can be melted in a given period at a given energy input. As a result, production cost is reduced. In addition, a lower fiberizing temperature will also permit glass formed with the inventive method and composition to be melted in a refractory-lined melter, or a melter with externally cooled walls, since both its melting and fiberizing temperatures are below the upper use temperatures of many commercially available refractories or other materials when external cooling is supplied.

The liquidus is defined as the highest temperature at which equilibrium exists between liquid glass and its primary crystalline phase. At all temperatures above the liquidus, the glass is free from crystals in its primary phase. At temperatures below the liquidus, crystals may form.

Another fiberizing property is delta-T (ΔT), which is defined as the difference between the fiberizing temperature and the liquidus. A larger ΔT offers a greater degree of flexibility during the formation of the glass fibers and helps to inhibit devitrification of the glass (that is, the formation of crystals within the melt) during melting and fiberizing. Increasing the ΔT also reduces the production cost of the glass fibers by allowing for a greater bushing life and by providing a wider process window for forming fibers.

Conversely a higher fiberizing temperature and/or a smaller ΔT means the fiber formation process is less forgiving, being more sensitive to temperature variations, cold spots and slow moving glass.

The glass compositions employed in the present invention are advantageously suitable for melting in a furnace or glass melter substantially free of platinum or other noble metal materials and alloys thereof, including traditional, commercially available refractory-lined glass melters, and commercially available glass melters lined with externally cooled walls, e.g. water-cooled walls.

Starting batch components typically include SiO₂ (ground silica sand), and Al₂O₃ (calcined alumina), Li₂CO₃ (lithium carbonate), H₃BO₃ (boric acid), NaCaB₅O₉·8H₂O (ulexite), 2CaO-3B₂O₃-5H₂O (colemanite) as well as chain modifiers from source materials such as MgCO₃ (magnesite), CaCO₃ (limestone), SrCO₃ (strontianite), BaCO₃ (witherite), ZrSiO₄ (zircon), and Na₂CO₃ (natrite). One skilled in the art will appreciate that other starting materials may be used. Additional non-limiting examples of suitable starting batch components include kaolinite (Al₂Si₂O₅(OH)₄), pyrophyllite (Al₂Si₄O₁₀(OH)₂), bauxite (AIO(OH)), wollastonite (CaSiO₃), spodumene(LiAlSi₂O₆), feldspar(CaAl₂Si₂O₈), dolomite (CaMg(CO₂)₂), lime (CaO), dolomitic quicklime (CaMgO₂), and hydrated lime (Ca(OH)₂).

### Glass Melting Furnace

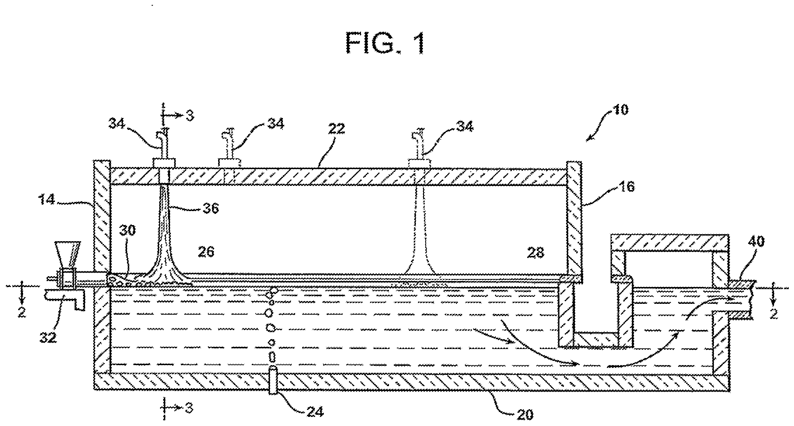

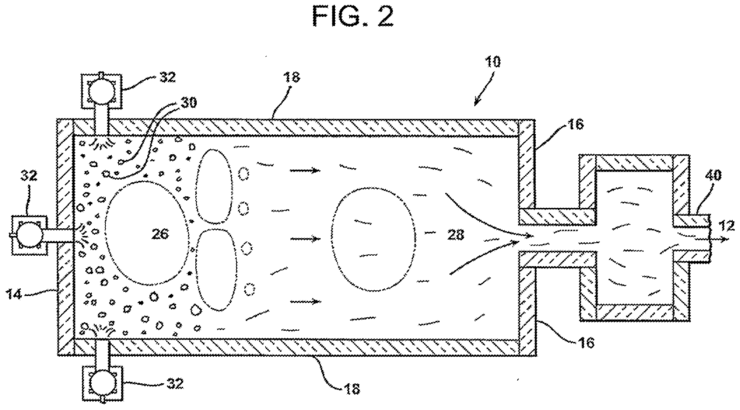

FIGS 1-4 depict a glass melting furnace (10) useful in the method of forming the glass fibers described herein and set forth in the examples and claims below. It may also be desirable to use oxygen-fired heating within the melting furnace, as disclosed in US Patent No. 7,509,819 entitled "OXYGEN-FIRED FRONT END FOR GLASS FORMING OPERATION", inventors David J Baker et al.,. The glass melting furnace (10) provides molten glass to a glass forehearth (12).

The molten glass is composed of 64-70 weight % SiO₂, 17-22 weight % Al₂O₃, 9-12 weight % MgO, 1.75 to 3.0 weight % R₂O where R₂O is the sum of Li₂O, Na₂O and K₂O and trace impurities present in the raw materials providing the SiO₂, Al₂O₃, MgO and R₂O components, each impurity being present in an amount of 0.05 weight percent or less. A fiber formed in accordance with the method of this exemplary embodiment will have a fiberizing temperature of less than 1454 °C (2650 ° F), and in certain embodiments less than about 1458 °C (2625° F), in other embodiments less than about 1427 °C (2600° F) and in certain embodiments less than about 1413 °C (2575° F) and a liquidus temperature that is below the fiberizing temperature in certain embodiments by at least 44 °C (80° F), and in other embodiments by at least about 67 °C (120° F), and in yet other embodiments by at least about 83 °C (150° F).

In one embodiment, the molten glass is composed of 64-70 weight % SiO₂, 17-22 weight % Al₂O₃, 9-12 weight % MgO, 1.75 to 3.0 weight % R₂O where R₂O is the sum of Li₂O, Na₂O and K₂O.

In another embodiment, the molten glass is composed of 64-70 weight % SiO₂, 17-22 weight % Al₂O₃, 9-12 weight % MgO, 1.75 to 3.0 weight % Li₂O.

The fibers produced and used in the present invention are substantially less expensive to make and also have good strength and density properties. The density of the fibers used in the present invention range between 2.434 - 2.520 g/cc, and more preferably 2.434 - 2.486 g/cc. Further, the glass fibers of the present invention, in certain embodiments, will have a pristine fiber strength in excess of 4689 MPa (680 KPSI), and in certain other embodiments a strength in excess of about 4827 MPa (700 KPSI), and in yet other embodiments a strength in excess of about 5033 MPa (730 KPSI. Further, the glass fibers will advantageously have a modulus greater than 82.74 GPa (12.0 MPSI), and in certain embodiments greater than about 83.98 GPa (12.18 MPSI), and in some embodiments greater than about 87.57 GPa (12.7 MPSI).

The method of the present invention is preferably performed using the glass melting furnace (10), which includes an elongated channel having an upstream end wall (14), a downstream end wall (16), side walls (18), a floor (20), and a roof (22). Each of the components of the glass melting furnace (10) are made from appropriate refractory materials such as alumina, chromic oxide, silica, alumina-silica, zircon, zirconia-alumina-silica, or similar oxide-based refractory materials, in particular the surfaces that are in contact with the molten glass. The roof (22) is shown generally as having an arcuate shape transverse to the longitudinal axis of the composition the channel; however, the roof may have any suitable design. The roof (22) is typically positioned between about 3-10 feet above the surface of the glass batch (30). The glass batch (30) is a mixture of raw materials used in the manufacture of glass in accordance with the present invention.

The glass melting furnace (10) may optionally include one or more bubblers (24) and/or electrical boost electrodes (not shown). The bubblers (24) and/or electrical boost electrodes increase the temperature of the bulk glass and increase the molten glass circulation under the batch cover.

Bubblers (24) and/or electrical boost electrodes may be particularly useful in the second and third exemplary embodiments, which include glass compositions having a higher fiberizing temperature, e.g. 1316 - 1593 ° C (2400 - 2900° F) and/or a low ΔT, e.g. as low as 45 ° C (25 ° F), or even a negative ΔT such as - 68° C (- 122 ° F), where the potential for devitrification is greater.

In addition, the glass melting furnace (10) may include two successive zones, an upstream melting zone (26) and a downstream refining zone (28). In the melting zone (26), the glass batch composition (30) may be charged into the furnace using a charging device (32) of a type well-known in the art.

In one suitable melter configuration, the glass batch material (30) forms a batch layer of solid particles on the surface of the molten glass in the melting zone (26) of the glass melting furnace (10). The floating solid batch particles of the glass batch composition (30) are at least partially melted by at least one burner (34) having a controlled flame shape and length mounted within the roof (22) of the glass melting furnace (10).

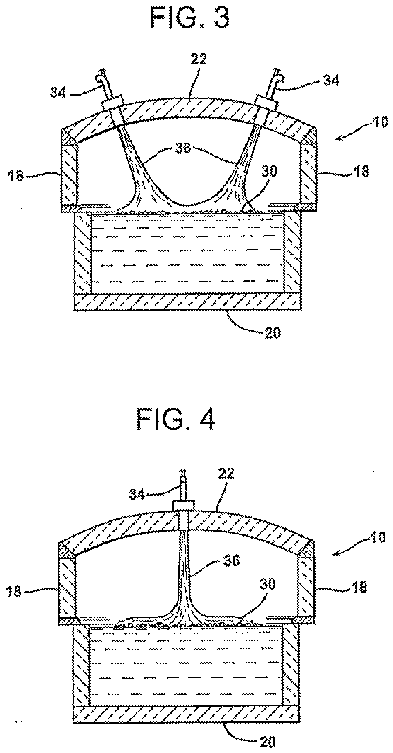

In one preferred embodiment, as shown in FIG. 1, the glass melting furnace (10) includes three burners (34). A single burner (34) is positioned upstream of two adjacently positioned downstream burners (34). However, it will be appreciated that any number of burners (34) may be positioned at any suitable location in the roof (22) of the furnace (10) over the batch to melt the glass batch (30). For example, two burners (34) may be positioned in a side-by-side relationship (FIG. 3) or a single burner may be used (FIG. 4).

It is to be noted that the burners (34) of glass melting furnace (10) may be arranged in the crown (roof) of the furnace, in the side walls, the end walls, submerged within the batch or molten glass, or in combinations thereof.

Other melters may be used without departing from the present invention. Suitable melters include Air-Gas melters, Oxygen-Gas melters, electrically heated melters, or any fossil fuel fired melter. It is possible to add electric boost or bubblers to any of the melting processes. It is also possible to include a separate refining zone (as shown in FIG. 1) or incorporate the refining zone into the main tank of the melter.

### Forehearth Arrangement

The forehearth receives molten glass discharged from the glass melting furnace and transports the molten glass, discharging the molten glass in suitable condition to a forming position. The components of the forehearth may be lined with appropriate refractory materials such as alumina, chromic oxide, silica, alumina-silica, zircon, zirconia-alumina-silica, or similar oxide-based refractory materials, in particular the surfaces that are in contact with the molten glass. Preferably such forehearth glass contact surfaces are lined with chromic oxide materials, zircon or combinations thereof.

For compositions having a fiberizing temperature of less than 1454 °C (2650 ° F) and a liquidus temperature that is below the fiberizing temperature by at least 44 °C 80° F), a conventional forehearth may be used.

For other compositions where the fiberizing temperature is high and/or the ΔT is low, other forehearth arrangements may be helpful in promoting an isothermal condition in the molten glass, thereby preventing devitrification. For example, transporting the molten glass through the forehearth at a shallow depth (D), e.g. less than about 203 mm (8 inches), or preferably less than about 89 mm (3.5 inches), will improve transmission of heat by radiation throughout the molten glass. Installed oxygen-fuel fired burners are particularly useful as a forehearth heat source in this regard. A typical oxygen-fuel firing system is supplied by BH-F (Engineering) Ltd. of England. As defined here, oxygen-fuel fired burners are burners that use oxygen (e.g., typically 90 to 99 percent purity with an impurity being a combination of nitrogen and argon) in a high purity as an oxidant, instead of ambient air used in air-fuel burners, and fossil fuel for a combustible hydrocarbon supply, but may include burners using oxygen-enriched air (e.g. 30 to 90 percent purity). The flame temperature of an oxygen-gas burner is about 2315 to about 2871 ° C (about 4200 to about 5200 ° F). At this temperature, the flame and products of combustion radiate energy at wavelengths that the molten glass can absorb. This promotes uniform glass temperature horizontally on the surface of the molten glass and vertically through the molten glass.

Air-fuel burners may also be used a forehearth heat source, particularly when installed with a very tight spacing, e.g. 4 inches apart.

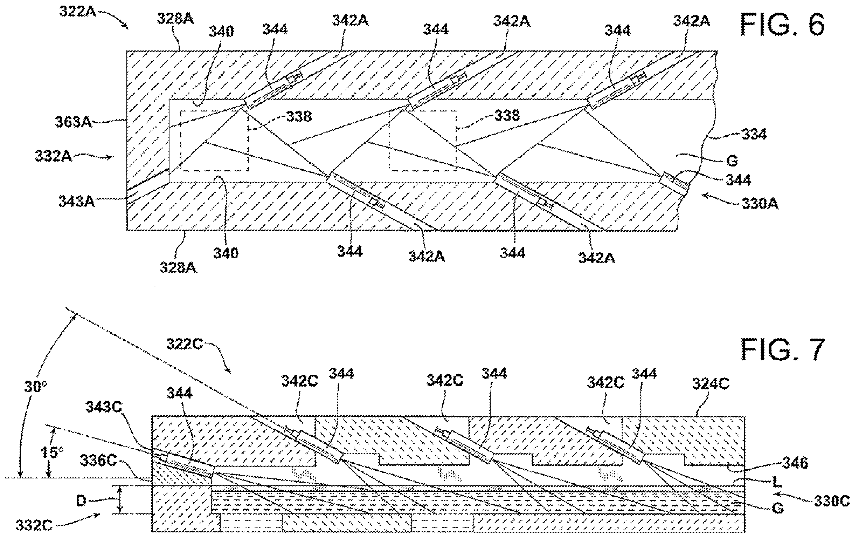

Exemplary forehearth arrangements useful in the present invention are shown in FIGs. 6 and 7. Forehearth (322A) is adapted to deliver a molten substance (e.g., molten glass G) from a glass melting furnace to a point of production (i.e., a forming position, discussed below). Molten glass (G) does not contact an upper portion of the forehearth (322A). Consequently, this portion can be constructed from relatively inexpensive refractory material (i.e., a super structure refractory material, such as silica, mullite, or other materials that are not required to withstand corrosive effects of molten glass (G)).

A lower portion of forehearth (322A) is below the glass level (L) and thus forms a glass contact surface that comes into contact with the molten glass (G). Consequently, this portion of forehearth (322A) is constructed of a more costly glass contact material. A ceramic refractory material (i.e., zircon, chromic oxide, or other suitable material) is a suitable glass contact refractory material because it can sustain the corrosive effects of molten glass (G).

Forehearth (322A) may comprise a top or crown (not shown), a bottom (also not shown), and sidewalls (328A). Forehearth (322A) has an upstream end, generally indicated at (330A), and a downstream end, generally indicated at (332A). An open end (334) may be provided at the downstream end (332A) of forehearth (322A). An end wall (336A) may be provided at the upstream end (330A) of forehearth (322A). One or more glass orifices (338) may be provided in the bottom of forehearth (322A) proximate, adjacent or close to the end wall (336A). The forehearth of the front end, as introduced above, is that portion of the forehearth (322A) having end wall (336A) and glass orifices (338) in the bottom.

Forehearth burners (344), such as oxygen-fuel burners, are positioned above the glass level (L), shown in FIG. 7. The forehearth burners (344) are oriented in a plane (e.g., a substantially horizontal plane) perpendicular to the surfaces (340) and at an acute angle relative to the surfaces (340). The forehearth burners (344) are pointed toward the downstream end 332A of forehearth (322A) at an angle between about 5 degrees to about 85 degrees relative to the surfaces (340), as shown in FIG. 6. Forehearth burners (344) may be staggered or alternatively spaced so that opposing forehearth burners (344) in the opposing sidewalls (328A) are laterally offset or do not laterally align (do not vertically align when viewing FIG. 6) with one another.

The flame temperature of an oxygen-fuel burner is about 2315- 2871 ° C (4200-5200 ° F). However, the flame is preferably very small. Consequently, the flame does not directly contact the sidewalls (328A). However, heat radiating from the flame is quite substantial. Although the flame does not directly contact the sidewalls (328A), the sidewalls (328A) are heated sufficiently by convection or heat otherwise radiating from the flame. This radiant heat is sufficient to properly condition the molten glass (G) and maintain the molten glass G at a desired temperature without compromising the integrity of forehearth (322A) by exposing forehearth (322A) to excessively high temperatures. This holds true even if the burners (344) are spaced about 1 foot to about 5 feet apart from one another.

It is to be appreciated that other forehearth burner arrangements are possible and fall within the scope of the invention. For example, another exemplary burner arrangement is illustrated in FIG. 7. The forehearth burners (344) are oriented in a plane (e.g., a substantially vertical plane) perpendicular to the surface (346) and at an acute angle relative to the surface (346). The forehearth burners (344) may be pointed toward the upstream end 330C of the channel (322C) at an angle between about 5 degrees to about 85 degrees relative to the surface 346, as shown in FIG. 7. Alternatively, the forehearth burners (344) can be pointed toward the downstream end (332C) of the channel (322C) at an angle between about 95 degrees to about 175 degrees relative to the surface (346).

It is to be noted that the burners may arranged in the crown (roof) of the forehearth, in the side walls, the end walls, submerged within the batch or molten glass, or in combinations thereof.

### Bushing assembly

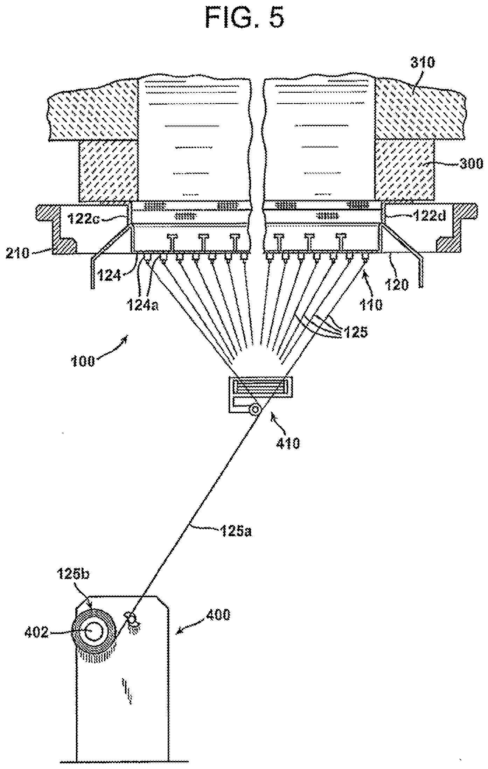

As shown in FIG. 5, a bushing assembly 100 includes a bushing (110) and a bushing frame 210. The bushing (110) includes a bushing main body (120) with sidewalls (122) and a tip plate (124) extending between the sidewalls (122). The main body (120) is positioned below a bushing block (300) that, in turn, is positioned beneath a forehearth (310). In practicing the method of the present invention, a stream of molten glass is received by the main body (120) from the forehearth (310). The forehearth (310) receives the molten glass from a melter (10) (shown in FIG. 1). A delivery channel (40) is positioned between the melter (10) and the forehearth (310) to deliver the molten glass batch composition (30) from the melter (10) to the forehearth (310). The forehearth (310) and bushing block (300) may be conventional in construction and may be formed from refractory materials.

The tip plate (124) contains a plurality of nozzles (124a) (also referred to as orifices) through which a plurality of streams of molten glass may be discharged. The streams of molten material may be mechanically drawn from the tip plate (124) to form continuous filaments (125) via a conventional winder device (400) such as a winder or chopper or other means of attenuation. The filaments (125) may be gathered into a single or multiple continuous strands (125a) after having received a protective coating of a sizing composition from a sizing applicator (410). The continuous filaments (125a) may be wound onto a rotating collet (402) of the winder device (400) to form a package (125b). The continuous filaments (125) may also be processed into other desired composite glass materials including, without limitation, wet use chopped strand fibers, dry use chopped strand fibers, continuous filament mats, chopped strand mats, wet formed mats or air laid mats.

High strength articles of the present invention use the formed fibers described above as glass fiber reinforcement within a polymer matrix material. Typical matrix materials include polyester resin, vinylester -phenolic resin, vinylester resin and epoxy resin, bismaleimide, poly- amide, vinyl ester phenolic, ethylene-acrylate or methacrylate copolymers, crosslinked ethylene-methyl acrylate, methyl methacrylate copolymer and ionomer, polycarbonate, polyurethane, nylon or aramid, and modified epoxies. The articles may be formed by any suitable manufacturing technique including compression molding, laminating, spray up, hand laying, prefabricated lay-up (prepreg), compression molding, vacuum bag molding, pressure bag molding, press molding, transfer molding, vacuum assisted resin transfer molding, pultrusion molding, filament winding, casting, autoclave molding, centrifugal casting resin transfer and continuous casting.

Having generally described this invention, a further understanding can be obtained by reference to certain specific examples illustrated below which are provided for purposes of illustration only and are not intended to be all inclusive or limiting unless otherwise specified.

### EXAMPLES

The glasses in the examples listed in Tables IIA - IIC were melted in platinum crucibles or in a continuous platinum-lined melter for determining the mechanical and physical properties of the glass and fibers produced there from. The units of measurement for the physical properties are: Viscosity (° F), Liquidus temperature (°F) and ΔT (°F). In some examples the glasses were fiberized and Strength (KPsi), Density (g/cc), and Modulus (MPsi) were measured.

The fiberizing temperature was measured using a rotating spindle viscometer. The fiberizing viscosity is defined as 1000 Poise. The liquidus was measured by placing a platinum container filled with glass in a thermal gradient furnace for 16 hours. The greatest temperature at which crystals were present was considered the liquidus temperature. The modulus was measured using the sonic technique on a single fiber of glass. The tensile strength was measured on a pristine single fiber.

**Table II-A**

| Glass | Ex. 1 | Ex. 2* | Ex. 3* | Ex. 4 | Ex. 5 | Ex. 6 |
|---|---|---|---|---|---|---|
| SiO₂ | 67.2 | 69 | 67 | 70 | 70 | 65 |
| Al₂O₃ | 20 | 22 | 22 | 17 | 17 | 21 |
| MgO | 9.8 | 9 | 11 | 11 | 10 | 11 |
| Li₂O | 3 | 0 | 0 | 2 | 3 | 3 |
| | | | | | | |
| Measured Viscosity(° F) | 2531 | 2761 | 2648 | 2557 | 2558 | 2461 |
| | 1388 | 1516 | 1453 | 1403 | 1403 | 1349 |
| 1^{st} Measured Liquidus (° F) | 2313 | 2619 | 2597 | 2332 | 2302 | 2296 |
| | 1267 | 1437 | 1425 | 1278 | 1261 | 1258 |
| 2^{nd} Measured Liquidus (° F) | 2302 | 2620 | 2614 | 2346 | 2308 | 2318 |
| | 1261 | 1438 | 1434 | 1286 | 1264 | 1270 |
| ΔT (° F) | 218 | 142 | 51 | 225 | 256 | 165 |
| | 121.1 | 78.89 | 28.33 | 125 | 142.2 | 91.67 |
| Measured Density (g/cc) | 2.459 | 2.452 | 2.481 | 2.450 | 2.441 | 2.482 |

| | | | | | | |
|---|---|---|---|---|---|---|
| * not within the scope of the claims | | | | | | |

**Table II-B**

| Glass | Ex. 7 | Ex. 8 | Ex. 9* | Ex. 10 | Ex. 11 | Ex. 12 |
|---|---|---|---|---|---|---|
| SiO₂ | 70 | 69 | 70 | 65 | 66 | 65 |
| Al₂O₃ | 18 | 17 | 21 | 22 | 22 | 22 |
| MgO | 9 | 11 | 9 | 11 | 9 | 10 |
| Li₂O | 3 | 3 | 0 | 2 | 3 | 3 |
| | | | | | | |
| Measured Viscosity ° F (°C) | 2544 | 2496 | 2752 | 2525 | 2523 | 2486 |
| | (1396) | (1369) | (1511) | (1385) | (1384) | (1363) |
| 1^{st} Measured Liquidus ° F (°C) | 2311 | 2234 | 2597 | 2468 | 2391 | 2361 |
| | (1266) | (1223) | (1425) | (1353) | (1311) | (1294) |
| 2^{nd} Measured Liquidus ° F (°C) | 2324 | 2343 | 2603 | 2462 | 2394 | 2382 |
| | (1273) | (1284) | (1428 ) | (1350) | (1312) | (1306) |
| ΔT ° F (°C) | 233 | 262 | 155 | 57 | 132 | 125 |
| | (129.44) | (145.56) | (86.11) | (31.67) | (73.33) | (69.44) |
| Measured Density (g/cc) | 2.434 | 2.455 | 2.443 | 2.486 | 2.460 | 2.474 |

| | | | | | | |
|---|---|---|---|---|---|---|
| * not within the scope of the claims | | | | | | |

**Table II-C**

| Glass | Ex. 13* | Ex. 14 | Ex. 15 | Ex. 16 | Ex. 17 | Ex. 18 |
|---|---|---|---|---|---|---|
| SiO₂ | 70 | 67.32 | 67.57 | 68.27 | 68.02 | 67.76 |
| Al₂O₃ | 19 | 20.49 | 20.49 | 20.10 | 20.10 | 20.10 |
| MgO | 11 | 10.00 | 10.00 | 9.69 | 9.69 | 9.69 |
| Li₂O | 0 | 2.00 | 1.75 | 1.75 | 2.00 | 2.25 |
| | | | | | | |
| Measured Viscosity ° F (°C) | 2679 | 2563 | 2584 | 2598 | 2578 | 2547 |
| | (1471) | (1406) | (1418) | (1426) | (1414) | (1397) |
| 1^{st} Measured Liquidus ° F (°C) | 2596 | 2456 | 2486 | 2446 | 2431 | 2399 |
| | (1424) | (1347) | (1363) | (1341) | (1333) | (1315) |
| 2^{nd} Measured Liquidus ° F (°C) | 2582 | 2447 | 2469 | 2469 | 2437 | 2406 |
| | (1417) | (1342) | (1354) | (1354) | (1354) | (1319) |
| ΔT ° F (°C) | 83 | 111.5 | 106.5 | 140.5 | 144 | 144.5 |
| | (46.11) | (61.94) | (59.17) | (78.06) | (80) | (80.28) |
| Measured Density (g/cc) | 2.453 | | 2.461 | | 2.452 | |

| | | | | | | |
|---|---|---|---|---|---|---|
| * not within the scope of the claims | | | | | | |

The compositions useful in the present invention may also include chain modifiers such as Na₂O, CaO and B₂O₃. Such compositions (not within the scope of the claims) are shown in Table II-D (below).

**Table II-D**

| Glass | Ex. 19 | Ex. 21 | Ex. 22 | Ex. 22 | Ex. 23 | Ex. 24 |
|---|---|---|---|---|---|---|
| SiO₂ | 75 | 66 | 65 | 65 | 66 | 74 |
| Al₂O₃ | 15 | 20 | 20 | 24 | 19 | 15 |
| MgO | 8 | 9 | 8 | 8 | 9 | 8 |
| Li₂O | 1 | 1 | 2 | 0 | 0 | 0 |
| Na₂O | 1 | 2 | 1 | 1 | 2 | 3 |
| CaO | | 2 | 4 | | | |
| B₂O₃ | | | | 2 | 4 | |
| | | | | | | |
| Measured Viscosity ° F (°C) | 2765 | 2607 | 2469 | 2669 | | 2809 |
| | (1518) | (1431) | (1354) | (1465) | | (1543) |
| 1^{st} Measured Liquidus ° F (°C) | 2422 | 2729 | | 2614 | 2630 | 2680 |
| | (1328) | (1498) | | (1434) | (1443) | (1471) |
| ΔT°F (°C) | 343 | -122 | | 55 | | 129 |
| | (190.56) | (-67.78) | | (30.56) | | (71.67) |

The fibers produced by the present invention have superior modulus and strength characteristics. The fibers of Example 1 have a Measured Modulus of 87.64 GPa (12.71 MPsi) and a Measured Strength of 4744 MPa (688 KPsi). The fibers of Example 3 have a Measured Modulus of 89.36 GPa (12.96 MPsi) and a Measured Strength of 5082 MPa (737 KPsi). The fibers of Example 17 have a Measured Modulus of 87.91 GPa (12.75 MPsi) and a Measured Strength of 5061 MPa (734 KPsi).

As is understood in the art, the above exemplary inventive compositions do not always total 100% of the listed components due to statistical conventions (such as, rounding and averaging) and the fact that some compositions may include impurities that are not listed. Of course, the actual amounts of all components, including any impurities, in a composition always total 100%. Furthermore, it should be understood that where small quantities of components are specified in the compositions, for example, quantities on the order of about 0.05 weight percent or less, those components may be present in the form of trace impurities present in the raw materials, rather than intentionally added.

Additionally, components may be added to the batch composition, for example, to facilitate processing, that are later eliminated, thereby forming a glass composition that is essentially free of such components. Thus, for instance, minute quantities of components such as fluorine and sulfate may be present as trace impurities in the raw materials providing the silica, lithia, alumina, and magnesia components in commercial practice of the invention or they may be processing aids that are essentially lost during manufacture.

As is apparent from the above examples, certain glass fiber compositions useful in the invention have advantageous properties, such as low fiberizing temperatures and wide differences between the liquidus temperatures and the fiberizing temperatures (high ΔT values). Other advantages and obvious modifications of the invention will be apparent to the artisan from the above description and further through practice of the invention.

In certain embodiments the high-performance glass produced by the present invention melts and refines at relatively low temperatures, has a workable viscosity over a wide range of relatively low temperatures, and a low liquidus temperature range.

In other embodiments the high-performance glass produced by the present invention melts and refines at relatively high temperatures, and has a workable viscosity over a relatively small temperature range.

## Claims

1. A process for producing glass fibers from raw glass batch in a refractory-lined glass melter, the process comprising the steps of:
charging raw glass batch to the melting zone of a refractory-lined glass melter, the glass batch consisting of:
64-70 weight percent SiO₂;
17-22 weight percent Al₂O₃;
9-12 weight percent MgO;
1.75-3.0 weight percent R₂O, where R₂O equals the sum of Li₂O, Na₂O and K₂O; and
trace impurities present in the raw materials providing the SiO₂, Al₂O₃, MgO and R₂O components, each impurity being present in an amount of 0.05 weight percent or less;
heating the glass batch to a forming temperature in excess of the liquidus temperature of a resulting glass to form a fiberizable molten glass; and
fiberizing said molten glass.

2. The process of claim 1, wherein glass produced from said batch has a fiberizing temperature of less than 1454°C (2650° F), and a ΔT of at least 44.44°C (80° F), wherein ΔT is the difference between the fiberizing temperature and the liquidus of the glass.

3. The process of claim 1 wherein glass produced from said batch has a ΔT of at least 66.67°C (120° F), wherein ΔT is the difference between the fiberizing temperature and the liquidus of the glass.

4. The process of claim 1, wherein the glass melter is lined with an oxide-based refractory material.

5. The process of claim 1, wherein the glass melter is lined with a refractory material selected from the group consisting of alumina, silica, chromic oxide, alumina-silica, zircon, zirconia-alumina-silica and combinations thereof.

6. The process of claim 1, wherein glass produced from the batch is fiberized at a forming temperature of less than 1427°C (2600° F).

7. The process of claim 1, wherein glass produced from the batch has a ΔT of at least 77.78°C (140° F), wherein ΔT is the difference between the fiberizing temperature and the liquidus of the glass.

8. The process of claim 1, wherein the glass batch consists of:
64-70 weight percent SiO₂;
17-22 weight percent Al₂O₃;
9-12 weight percent MgO; and
1.75-3.0 weight percent R₂O, where R₂O equals the sum of Li₂O, Na₂O and K₂O.

9. The process of claim 1, wherein the glass batch consists of:
64-70 weight percent SiO₂;
17-22 weight percent Al₂O₃;
9-12 weight percent MgO; and
1.75-3.0 weight percent Li₂O.

10. A glass fiber produced by the process of claim 1.

11. A process for manufacturing a high strength composite article comprising the steps of:
forming fibers by the process of claim 1;
combining the fibers with a matrix material;
shaping an article from the combined fibers and matrix material; and
curing the matrix material within the article.

12. The process of claim 11 which further comprises:
forming an intermediate glass structure before combining the fibers and the matrix material, said structure comprising one or more of wet use chopped strand, dry use chopped strand, continuous filament mat, chopped strand mat, wet formed mat and air laid mat.

13. The process of claim 11, wherein the matrix material comprises one or more of polyester resin, vinylester -phenolic resin, vinylester resin and epoxy resin, bismaleimide, poly- amide, vinyl ester phenolic, ethylene-acrylate or methacrylate copolymers, crosslinked ethylene-methyl acrylate, methyl methacrylate copolymer and ionomer, polycarbonate, polyurethane, nylon or aramid, and modified epoxies.

## Patentansprüche

1. Verfahren zur Herstellung von Glasfasern aus einem Rohglasgemenge in einer feuerfest ausgekleideten Glasschmelzvorrichtung, wobei das Verfahren die folgenden Schritte umfasst:
Zuführen eines Rohglasgemenges in eine Schmelzzone einer feuerfest ausgekleideten Glasschmelzvorrichtung, wobei das Glasgemenge besteht aus:
64 bis 70 Gewichtsprozent SiO₂,
17 bis 22 Gewichtsprozent Al₂O₃,
9 bis 12 Gewichtsprozent MgO,
1,75 bis 3,0 Gewichtsprozent R₂O, wobei R₂O der Summe von Li₂O, Na₂O und K₂O entspricht, und
in den Rohstoffen, die die Komponenten SiO₂, Al₂O₃, MgO und R₂O bereitstellen, vorkommenden Spurenverunreinigungen, wobei jede Verunreinigung in einer Menge von 0,05 Gewichtsprozent oder weniger vorkommt,
Erwärmen des Glasgemenges auf eine Bildungstemperatur, die höher als die Liquidustemperatur eines daraus entstehenden Glases ist, um ein zu Fasern verarbeitbares geschmolzenes Glas zu bilden, und
Verarbeiten des geschmolzenen Glases zu Fasern.

2. Verfahren nach Anspruch 1, wobei aus dem Gemenge hergestelltes Glas eine Faserbildungstemperatur von weniger als 1454 °C (2650 °F) und eine ΔT von wenigstens 44,44 °C (80 °F) aufweist, wobei ΔT die Differenz zwischen der Faserbildungstemperatur und der Liquidustemperatur des Glases ist.

3. Verfahren nach Anspruch 1, wobei aus dem Gemenge hergestelltes Glas eine ΔT von wenigstens 66,67 °C (120 °F) aufweist, wobei ΔT die Differenz zwischen der Faserbildungstemperatur und der Liquidustemperatur des Glases ist.

4. Verfahren nach Anspruch 1, wobei die Glasschmelzvorrichtung mit einem feuerfesten Material auf Oxidbasis ausgekleidet ist.

5. Verfahren nach Anspruch 1, wobei die Glasschmelzvorrichtung mit einem feuerfesten Material, das aus der aus Aluminiumoxid, Siliziumdioxid, Chromoxid, Aluminiumoxid-Siliziumdioxid, Zirkon, Zirkoniumoxid-Aluminiumoxid-Siliziumdioxid und Kombinationen davon bestehenden Gruppe ausgewählt ist, ausgekleidet ist.

6. Verfahren nach Anspruch 1, wobei aus dem Gemenge hergestelltes Glas bei einer Bildungstemperatur von weniger als 1427 °C (2600 °F) zu Fasern verarbeitet wird.

7. Verfahren nach Anspruch 1, wobei aus dem Gemenge hergestelltes Glas eine ΔT von wenigstens 77,78 °C (140 °F) aufweist, wobei ΔT die Differenz zwischen der Faserbildungstemperatur und der Liquidustemperatur des Glases ist.

8. Verfahren nach Anspruch 1, wobei das Glasgemenge besteht aus:
64 bis 70 Gewichtsprozent SiO₂,
17 bis 22 Gewichtsprozent Al₂O₃,
9 bis 12 Gewichtsprozent MgO und
1,75 bis 3,0 Gewichtsprozent R₂O, wobei R₂O der Summe von Li₂O, Na₂O und K₂O entspricht.

9. Verfahren nach Anspruch 1, wobei das Glasgemenge besteht aus:
64 bis 70 Gewichtsprozent SiO₂,
17 bis 22 Gewichtsprozent Al₂O₃,
9 bis 12 Gewichtsprozent MgO und
1,75 bis 3,0 Gewichtsprozent Li₂O.

10. Glasfaser, hergestellt mittels des Verfahrens nach Anspruch 1.

11. Verfahren zur Herstellung eines hochfesten Verbundgegenstands, umfassend die folgenden Schritte:
Ausbilden der Fasern mittels des Verfahrens nach Anspruch 1,
Verbinden der Fasern mit einem Verbundfüllstoff,
Formen eines Gegenstands aus den Fasern und dem mit ihnen verbundenen Verbundfüllstoff und
Härten des Verbundfüllstoffs in dem Gegenstand.

12. Verfahren nach Anspruch 11, ferner umfassend:
Ausbilden einer Glaszwischenstruktur vor dem Verbinden der Fasern und des Verbundfüllstoffs, wobei die Struktur einen/eine oder mehrere von geschnittenen Strängen zur nassen Verwendung, geschnittenen Strängen zur trockenen Verwendung, Endlosfasermatten, Kurzfasermatten, nassgebildeten Matten und luftgelegten Matten umfasst.

13. Verfahren nach Anspruch 11, wobei der Verbundfüllstoff eines oder mehrere von Polyesterharz, Vinylester-Phenolharz, Vinylesterharz und Epoxidharz, Bismaleimid-, Polyamid-, Vinylester-Phenol-, Ethylenacrylat- oder Methacrylat-Copolymeren, vernetzten Ethylen-Methylacrylat-, Methylmethacrylat-Copolymeren und -lonomeren, Polycarbonat, Polyurethan, Nylon oder Aramid und modifizierten Epoxiden umfasst.

## Revendications

1. Procédé de production de fibres de verre dans une cuve de fusion du verre doublée d'un matériau réfractaire, le procédé comprenant les étapes de :
charger une composition de verre brute dans la zone de fusion d'une cuve de fusion du verre revêtue d'un matériau réfractaire, la composition étant constituée de :
64-70 pourcent en masse de SiO₂ ;
17-22 pourcent en masse de Al₂O₃ ;
9-12 pourcent en masse de MgO ;
1,75-3,0 pourcent en masse de R₂O, où R₂O est égal à la somme de Li₂O, Na₂O et K₂O ; et
des traces d'impuretés présentes dans les matières brutes fournissant les composants SiO₂, Al₂O₃, MgO et R₂O, chaque impureté étant présente en une quantité de 0,05 pourcent en masse ou moins ;
chauffer la composition de verre à une température de formation supérieure à la température de liquidus du verre à obtenir pour former un verre fondu susceptible d'être fibré ; et
fibrer ledit verre fondu.

2. Procédé selon la revendication 1, dans lequel le verre produit à partir de ladite composition a une température de fibrage inférieure à 1454°C (2650° F), et un ΔT d'au moins 44,44°C (80° F), où ΔT est la différence entre la température de fibrage et le liquidus du verre.

3. Procédé selon la revendication 1, dans lequel le verre produit à partir de ladite composition a un ΔT d'au moins 66,67°C (120° F), où ΔT est la différence entre la température de fibrage et le liquidus du verre.

4. Procédé selon la revendication 1, dans lequel la cuve de fusion du verre est revêtue d'un matériau réfractaire à base d'oxyde.

5. Procédé selon la revendication 1, dans lequel la cuve de fusion du verre est doublée d'un matériau réfractaire choisi dans le groupe constitué par l'alumine, la silice, l'oxyde chromique, l'alumine-silice, la zircone, la zircone-alumine-silice et leurs combinaisons.

6. Procédé selon la revendication 1, dans lequel le verre produit à partir de ladite composition est fibré à une température de formation inférieure à 1427°C (2600° F).

7. Procédé selon la revendication 1, dans lequel le verre produit à partir de ladite composition a un ΔT d'au moins 77,78°C (140° F), où ΔT est la différence entre la température de fibrage et le liquidus du verre.

8. Procédé selon la revendication 1, dans lequel la composition de verre est constituée de :
64-70 pourcent en masse de SiO₂;
17-22 pourcent en masse de Al₂O₃;
9-12 pourcent en masse de MgO; et
1,75-3,0 pourcent en masse de R₂O, où R₂O est égal à la somme de Li₂O, Na₂O et K₂O.

9. Procédé selon la revendication 1, dans lequel la composition de verre est constituée de :
64-70 pourcent en masse de SiO₂;
17-22 pourcent en masse de Al₂O₃;
9-12 pourcent en masse de MgO; et
1,75-3,0 pourcent en masse de Li₂O.

10. Fibre de verre produite par le procédé de la revendication 1.

11. Procédé de fabrication d'un article composite de résistance élevée comprenant les étapes de :
former des fibres par le procédé de la revendication 1 ;
combiner les fibres avec un matériau formant matrice ;
mettre en forme un article à partir des fibres combinées avec le matériau formant matrice ; et
durcir le matériau formant matrice à l'intérieur de l'article.

12. Procédé selon la revendication 11, qui comprend en outre :
former une structure intermédiaire avant de combiner les fibres et le matériau formant matrice, ladite structure comprenant un ou plusieurs de : brins de fibre pour usage en milieu humide, brins de fibre pour usage en milieu sec, tapis de filaments continus, tapis de brins de fibre, tapis formé par voie et tapis formé par voie sèche.

13. Procédé selon la revendication 11, dans lequel le matériau formant matrice comprend un ou plusieurs de : résine polyester, résine vinylester-phénolique, résine vinylester, résine époxy, bismaléimide, polyamide, vinylester phénolique, copolymères éthylène-acrylate ou méthacrylate, éthylène-acrylate de méthyle réticulé, copolymère et ionomère de méthacrylate de méthyle polycarbonate, polyuréthane, nylon ou aramide, et époxys modifiés.
